# EUROPEAN PATENT APPLICATION

(11) **EP 4 224 838 A1**
(43) Date of publication of application: **09.08.2023**
(21) Application number: 23154324.0
(22) Date of filing: 31.01.2023
(51) Int. Cl.: H04N 7/14, H04N 21/218, H04N 21/2187, H04N 23/51, H04N 23/57

(54) **METHODS, APPARATUSES AND COMPUTER PROGRAM PRODUCTS FOR ENABLING IMMERSIVE VIDEO COMMUNICATIONS AND LIVE VIDEO STREAMING**

(30) Priority: 08.02.2022 US 202263307849 P; 13.06.2022 US 202217839419
(71) Applicant: Meta Platforms, Inc., Menlo Park, CA 94025 (US)
(72) Inventor: ZHANG, Zhaonian, Menlo Park, 94025 (US); HSU, Joyce, Menlo Park, 94025 (US); SUAREZ, Francisco Xavier, Menlo Park, 94025 (US); KHAN, Saara, Menlo Park, 94025 (US)
(74) Representative: Murgitroyd & Company

(57) **Abstract**

A system for simultaneously providing multiple perspectives of video content during a communication is disclosed. The system may receive first video content captured by a first communication device. The first video content may be associated with a first viewpoint perspective indicating first video data associated with a view that a first user views via the first communication device when looking at an environment. The system may receive second video content captured by a second communication device. The second video content may be associated with a second viewpoint perspective associated with second video data indicating at least one of the first user or one or more objects within the environment. The system may provide the first video data associated with the first viewpoint perspective and the second video data associated with the second viewpoint perspective simultaneously to one or more communication devices during a communication associated with a plurality of devices.

## Description

### TECHNOLOGICAL FIELD

Exemplary embodiments of this disclosure relate generally to methods, apparatuses and computer program products for enabling communication devices to simultaneously deliver immersive video content from multiple perspectives to other communication devices during communications.

### BACKGROUND

Many wearable devices may typically be unable to provide immersive video experiences for sharing video content with other users from multiple points of view of a user associated with the wearable device capturing the video content. For instance, some wearable devices may enable one or more users in a video call/conference with the user associated with the wearable device capturing the video content to view the perspective of what the user associated with the wearable device is able to view but may not simultaneously enable one or more users in the video call/conference to be able to view the user associated with the wearable device. The inability to view multiple viewpoints and perspectives of a user associated with a wearable device capturing video content during a communication may be burdensome and cumbersome and may inhibit the user experience.

In view of the foregoing drawbacks, it may be beneficial to provide an efficient and reliable mechanism to simultaneously provide multiple viewpoints and perspectives associated with a user during video communications.

### BRIEF SUMMARY

Exemplary embodiments are described for enabling communication devices to deliver immersive video content communications and/or live video streaming from various viewpoints and perspectives (e.g., first person perspectives, third person perspectives, etc.).

The exemplary embodiments may utilize the camera capabilities of a plurality of communication devices (e.g., smart watches, smart glasses, charging cases, and other suitable devices) to provide video content associated with the various viewpoints and perspectives.

The exemplary embodiments may provide immersive video calls/conferences and/or live video streaming experiences by enabling users to view/share video content of captured objects in a real-world environment from both a first person perspective and a third person perspective. Some exemplary embodiments may enable users to switch between the camera of a first communication device (e.g., a smart watch, etc.) and the camera of a second communication device (e.g., smart glasses, a smart tablet, etc.) to provide only the first person perspective or the third person perspective in some instances. In this regard, some exemplary embodiments may enable users to switch back and forth between the first person perspective and the third person perspective during a communication (e.g., a video call/conference, a live video stream).

In one example embodiment, a method is provided. The method may include receiving first video content captured by a first communication device. The first video content may be associated with a first viewpoint perspective indicating first video data associated with a view that a first user views via the first communication device when looking at an environment. The method may further include receiving second video content captured by a second communication device. The second video content may be associated with a second viewpoint perspective associated with second video data indicating at least one of the first user or one or more objects within the environment. The method may further include providing the first video data associated with the first viewpoint perspective and the second video data associated with the second viewpoint perspective simultaneously to one or more communication devices during a communication associated with a plurality of devices.

In another example embodiment, a device is provided. The device may include one or more processors and a memory including computer program code instructions. The memory and computer program code instructions are configured to, with at least one of the processors, cause the device to at least perform operations including receiving first video content captured by a first communication device. The first video content may be associated with a first viewpoint perspective indicating first video data associated with a view that a first user views via the first communication device when looking at an environment. The memory and computer program code are also configured to, with the processor, cause the device to receive second video content captured by a second communication device. The second video content may be associated with a second viewpoint perspective associated with second video data indicating at least one of the first user or one or more objects within the environment. The memory and computer program code are also configured to, with the processor, cause the device to provide the first video data associated with the first viewpoint perspective and the second video data associated with the second viewpoint perspective simultaneously to one or more communication devices during a communication associated with a plurality of devices.

In yet another example embodiment, a computer program product is provided. The computer program product includes at least one computer-readable storage medium having computer-executable program code instructions stored therein. The computer-executable program code instructions may include program code instructions configured to receive first video content captured by a first communication device. The first video content may be associated with a first viewpoint perspective indicating first video data associated with a view that a first user views via the first communication device when looking at an environment. The computer program product may further include program code instructions configured to receive second video content captured by a second communication device. The second video content may be associated with a second viewpoint perspective associated with second video data indicating at least one of the first user or one or more objects within the environment. The computer-executable program code instructions may further include program code instructions configured to provide the first video data associated with the first viewpoint perspective and the second video data associated with the second viewpoint perspective simultaneously to one or more communication devices during a communication associated with a plurality of devices.

In accordance with a first aspect of the present disclosure, there is provided a method comprising: receiving first video content captured by a first communication device, the first video content is associated with a first viewpoint perspective indicating first video data associated with a view that a first user views via the first communication device when looking at an environment; receiving second video content captured by a second communication device, the second video content is associated with a second viewpoint perspective associated with second video data indicating at least one of the first user or one or more objects within the environment; and providing the first video data associated with the first viewpoint perspective and the second video data associated with the second viewpoint perspective simultaneously to one or more communication devices during a communication associated with a plurality of devices.

In some embodiments, the first viewpoint perspective and the second viewpoint perspective may be different.

In some embodiments, the communication may comprise a video call, a video conference or a live video stream.

In some embodiments, providing may comprise providing the first video data and the second video data simultaneously to the one or more communication devices via a communication link.

In some embodiments, the first communication device may comprise smart glasses, an artificial reality device, or a head-mounted display.

In some embodiments, the second communication device may comprise a smart watch, a charging case, or other device.

In some embodiments, the method may further comprise: enabling switching between the first viewpoint perspective and the second viewpoint perspective during the communication in response to receipt of an indication of at least one tap or touch associated with the first communication device.

In some embodiments, the method may further comprise: enabling switching between a first camera associated with the first communication device and a second camera associated with the second communication device during the communication in response to receipt of an indication of at least one tap or touch associated with the first communication device.

In accordance with a further aspect of the present disclosure, there is provided a device comprising: one or more processors; and at least one memory storing instructions, that when executed by the one or more processors, cause the device to: receive first video content captured by a first communication device, the first video content is associated with a first viewpoint perspective indicating first video data associated with a view that a first user views via the first communication device when looking at an environment; receive second video content captured by a second communication device, the second video content is associated with a second viewpoint perspective associated with second video data indicating at least one of the first user or one or more objects within the environment; and provide the first video data associated with the first viewpoint perspective and the second video data associated with the second viewpoint perspective simultaneously to one or more communication devices during a communication associated with a plurality of devices.

In some embodiments, the first viewpoint perspective and the second viewpoint perspective may be different.

In some embodiments, the communication may comprise a video call, a video conference, or a live video stream.

In some embodiments, when the one or more processors further execute the instructions, the device may be configured to: provide the first video data and the second video data by providing the first video data and the second video data simultaneously to the one or more communication devices via a communication link.

In some embodiments, the first communication device may comprise smart glasses, an artificial reality device, or a head-mounted display.

In some embodiments, the second communication device may comprise a smart watch, a charging case, or other device.

In some embodiments, when the one or more processors further execute the instructions, the device may be configured to: enable switching between the first viewpoint perspective and the second viewpoint perspective during the communication in response to receipt of an indication of at least one tap or touch associated with the first communication device.

In some embodiments, when the one or more processors further execute the instructions, the device may be configured to: enable switching between a first camera associated with the first communication device and a second camera associated with the second communication device during the communication in response to receipt of an indication of at least one tap or touch associated with the first communication device.

In accordance with a further aspect of the present disclosure, there is provided a computer-readable medium storing instructions that, when executed, cause: receiving first video content captured by a first communication device, the first video content is associated with a first viewpoint perspective indicating first video data associated with a view that a first user views via the first communication device when looking at an environment; receiving second video content captured by a second communication device, the second video content is associated with a second viewpoint perspective associated with second video data indicating at least one of the first user or one or more objects within the environment; and providing the first video data associated with the first viewpoint perspective and the second video data associated with the second viewpoint perspective simultaneously to one or more communication devices during a communication associated with a plurality of devices.

In some embodiments, the instructions, when executed, may further cause: providing the first video data and the second video data by providing the first video data and the second video data simultaneously to the one or more communication devices via a communication link.

In some embodiments, the instructions, when executed, may further cause: enabling switching between the first viewpoint perspective and the second viewpoint perspective during the communication in response to receipt of an indication of at least one tap or touch associated with the first communication device.

In some embodiments, the instructions, when executed, may further cause: enabling switching between a first camera associated with the first communication device and a second camera associated with the second communication device during the communication in response to receipt of an indication of at least one tap or touch associated with the first communication device.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed. It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings exemplary embodiments of the disclosed subject matter; however, the disclosed subject matter is not limited to the specific methods, compositions, and devices disclosed. In addition, the drawings are not necessarily drawn to scale. In the drawings:
FIG. 1 is a diagram of an exemplary network environment in accordance with an exemplary embodiment.
FIG. 2 illustrates an artificial reality system comprising a headset, in accordance with exemplary embodiments of the present invention.
FIG. 3 is a diagram of an exemplary communication device in accordance with an exemplary embodiment.
FIG. 4 is a diagram of an exemplary computing system in accordance with an exemplary embodiment.
FIG. 5 is a diagram of a process for simultaneously providing video content from multiple perspectives and/or viewpoints in accordance with an exemplary embodiment.
FIG. 6 illustrates an operation in accordance with exemplary embodiments of the present invention.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout. As used herein, the terms "data," "content," "information" and similar terms may be used interchangeably to refer to data capable of being transmitted, received and/or stored in accordance with embodiments of the invention. Moreover, the term "exemplary", as used herein, is not provided to convey any qualitative assessment, but instead merely to convey an illustration of an example. Thus, use of any such terms should not be taken to limit the scope of embodiments of the invention. As defined herein a "computer-readable storage medium," which refers to a non- transitory, physical or tangible storage medium (e.g., volatile or non-volatile memory device), may be differentiated from a "computer-readable transmission medium," which refers to an electromagnetic signal.

As referred to herein, a first person perspective or point of view (POV) may, for example, be a captured video/image showing what a user is looking at in an environment as represented by an image/video capturing device. The first person perspective may be presented on a display to one or more other users.

As referred to herein, a third person perspective or point of view may, for example, be a captured video/image showing, in part, a user and/or objects in an environment being captured by an image/video capturing device which may be presented on a display to one or more other uses.

It is to be understood that the methods and systems described herein are not limited to specific methods, specific components, or to particular implementations. It is also to be understood that the terminology used herein is for the purpose of describing particular embodiments only and is not intended to be limiting.

### Exemplary System Architecture

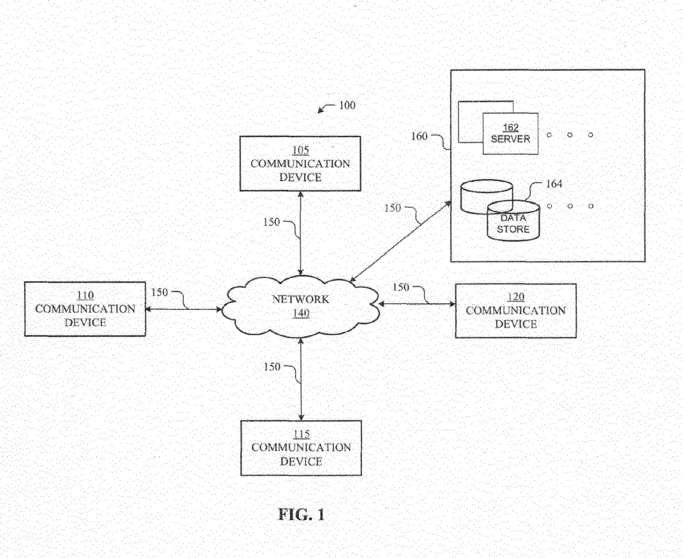

Reference is now made to FIG. 1, which is a block diagram of a system according to exemplary embodiments. As shown in FIG. 1, the system 100 may include one or more communication devices 105, 110, 115 and 120 and a network device 160. Additionally, the system 100 may include any suitable network such as, for example, network 140. As an example and not by way of limitation, one or more portions of network 140 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 140 may include one or more networks 140.

Links 150 may connect the communication devices 105, 110, 115 and 120 to network 140, network device 160 and/or to each other. This disclosure contemplates any suitable links 150. In some exemplary embodiments, one or more links 150 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some exemplary embodiments, one or more links 150 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout system 100. One or more first links 150 may differ in one or more respects from one or more second links 150.

In some exemplary embodiments, communication devices 105, 110, 115, 120 may be electronic devices including hardware, software, or embedded logic components or a combination of two or more such components and capable of carrying out the appropriate functionalities implemented or supported by the communication devices 105, 110, 115, 120. As an example, and not by way of limitation, the communication devices 105, 110, 115, 120 may be a computer system such as for example a desktop computer, notebook or laptop computer, netbook, a tablet computer (e.g., a smart tablet), e-book reader, Global Positioning System (GPS) device, camera, personal digital assistant (PDA), handheld electronic device, cellular telephone, smartphone, smart glasses, augmented/virtual reality device, smart watches, charging case, or any other suitable electronic device, or any suitable combination thereof. The communication devices 105, 110, 115, 120 may enable one or more users to access network 140. The communication devices 105, 110, 115, 120 may enable a user(s) to communicate with other users at other communication devices 105, 110, 115, 120.

Network device 160 may be accessed by the other components of system 100 either directly or via network 140. As an example and not by way of limitation, communication devices 105, 110, 115, 120 may access network device 160 using a web browser or a native application associated with network device 160 (e.g., a mobile social-networking application, a messaging application, another suitable application, or any combination thereof) either directly or via network 140. In particular exemplary embodiments, network device 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular exemplary embodiments, each server 162 may include hardware, software, or embedded logic components or a combination of two or more such components for carrying out the appropriate functionalities implemented and/or supported by server 162. In particular exemplary embodiments, network device 160 may include one or more data stores 164. Data stores 164 may be used to store various types of information. In particular exemplary embodiments, the information stored in data stores 164 may be organized according to specific data structures. In particular exemplary embodiments, each data store 164 may be a relational, columnar, correlation, or other suitable database. Although this disclosure describes or illustrates particular types of databases, this disclosure contemplates any suitable types of databases. Particular exemplary embodiments may provide interfaces that enable communication devices 105, 110, 115, 120 and/or another system (e.g., a third-party system) to manage, retrieve, modify, add, or delete, the information stored in data store 164.

Network device 160 may provide users of the system 100 the ability to communicate and interact with other users. In particular exemplary embodiments, network device 160 may provide users with the ability to take actions on various types of items or objects, supported by network device 160. In particular exemplary embodiments, network device 160 may be capable of linking a variety of entities. As an example and not by way of limitation, network device 160 may enable users to interact with each other as well as receive content from other systems (e.g., third-party systems) or other entities, or to allow users to interact with these entities through an application programming interfaces (API) or other communication channels.

It should be pointed out that although FIG. 1 shows one network device 160 and four communication devices 105, 110, 115 and 120 any suitable number of network devices 160 and communication devices 105, 110, 115 and 120 may be part of the system of FIG. 1 without departing from the scope of the present disclosure.

### Exemplary Artificial Reality System

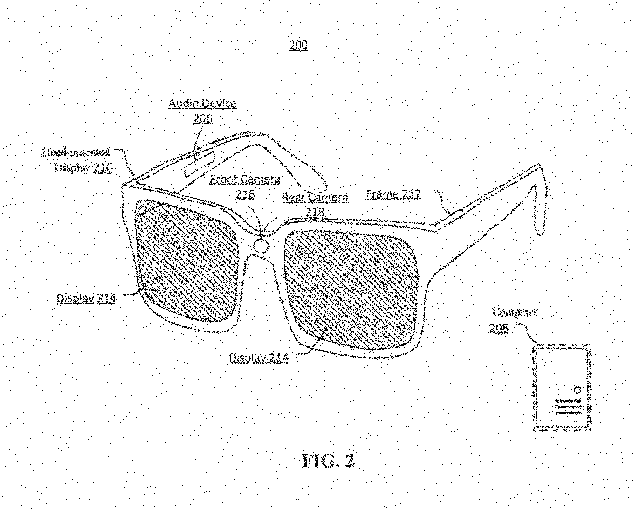

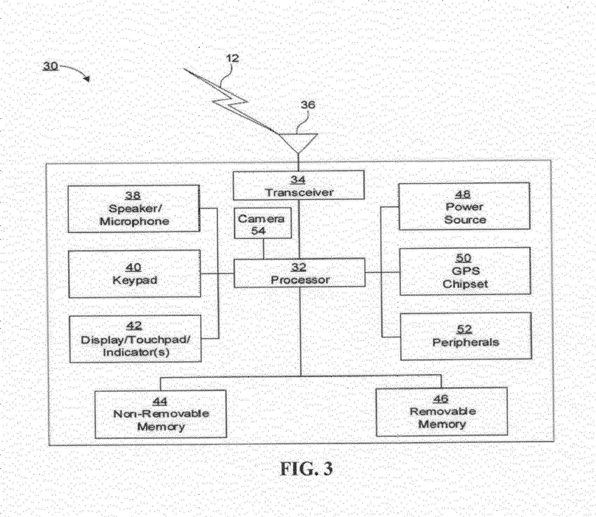

FIG. 2 illustrates an example artificial reality system 200. The artificial reality system 200 (also referred to herein as artificial reality device 200) may include a head-mounted display (HMD) 210 (e.g., smart glasses) comprising a frame 212, one or more displays 214, and a computing device 208 (also referred to herein as computer 208). In some exemplary embodiments, the HMD 210 may be one or more of the communication devices 105, 110, 115, 120. The displays 214 may be transparent or translucent allowing a user wearing the HMD 210 to look through the displays 214 to see the real world (e.g., real world environment) and displaying visual artificial reality content to the user at the same time. The HMD 210 may include an audio device 206 (e.g., speaker/microphone 38 of FIG. 3) that may provide audio artificial reality content to users. The HMD 210 may include one or more cameras 216, 218 which may capture images and/or videos of environments. In one exemplary embodiment, the HMD 210 may include a camera 218 which may be a rear-facing camera tracking movement and/or gaze of a user's eyes.

One of the cameras 216 may be a forward-facing camera capturing images and/or videos of the environment that a user wearing the HMD 210 may view. The HMD 210 may include an eye tracking system to track the vergence movement of the user wearing the HMD 210. In one exemplary embodiment, the camera 216 may be the eye tracking system. The HMD 210 may include a microphone of the audio device 206 to capture voice input from the user. The augmented reality system 200 may further include a controller (e.g., processor 32 of FIG. 3) comprising a trackpad and one or more buttons. The controller may receive inputs from users and relay the inputs to the computing device 208. The controller may also provide haptic feedback to one or more users. The computing device 208 may be connected to the HMD 210 and the controller through cables or wireless connections. The computing device 208 may control the HMD 210 and the controller to provide the augmented reality content to and receive inputs from one or more users. In some example embodiments, the controller (e.g., processor 32 of FIG. 3) may be a standalone controller or integrated within the HMD 210. The computing device 208 may be a standalone host computer device, an on-board computer device integrated with the HMD 210, a mobile device, or any other hardware platform capable of providing artificial reality content to and receiving inputs from users. In some exemplary embodiments, HMD 210 may include an artificial reality system/virtual reality system.

### Exemplary Communication Device

FIG. 3 illustrates a block diagram of an exemplary hardware/software architecture of a communication device such as, for example, user equipment (UE) 30. In some exemplary embodiments, the UE 30 may be any of communication devices 105, 110, 115, 120. In some exemplary embodiments, the UE 30 may be a computer system such as for example a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, smart watch, charging case, or any other suitable electronic device. As shown in FIG. 3, the UE 30 (also referred to herein as node 30) may include a processor 32, non-removable memory 44, removable memory 46, a speaker/microphone 38, a keypad 40, a display, touchpad, and/or indicators 42, a power source 48, a global positioning system (GPS) chipset 50, and other peripherals 52. The power source 48 may be capable of receiving electric power for supplying electric power to the UE 30. For example, the power source 48 may include an alternating current to direct current (AC-to-DC) converter allowing the power source 48 to be connected/plugged to an AC electrical receptable and/or Universal Serial Bus (USB) port for receiving electric power. The UE 30 may also include a camera 54. In an exemplary embodiment, the camera 54 may be a smart camera configured to sense images/video appearing within one or more bounding boxes. The UE 30 may also include communication circuitry, such as a transceiver 34 and a transmit/receive element 36. It will be appreciated the UE 30 may include any sub-combination of the foregoing elements while remaining consistent with an embodiment. In an example embodiment in which the UE 30 may be a charging case (also referred to herein as carrying case, companion case), the charging case may be a charging case for smart glasses, smart watches and/or other smart devices. The charging case may include one or more microphones (e.g., microphone 38) and wireless functionality built in, to be communicatively coupled and/or paired to smart glasses, smart watches, and/or other smart devices. The charging case may communicate content (e.g., audio, video, images, etc.) to the smart glasses, smart watches and/or other smart devices via one or more signals such as, for example, electromagnetic signals (e.g., a radio frequency signal(s), a Wi-Fi signal(s), a Bluetooth signal(s)) in instances in which the smart watches, smart glasses and/or other smart devices are within the charging case and/or within a proximity (e.g., located a few feet or yards) to the charging case. In some example embodiments, the charging case may have a camera (e.g., camera 54).

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., memory 44 and/or memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected.

The transmit/receive element 36 may be configured to transmit signals to, or receive signals from, other nodes or networking equipment. For example, in an exemplary embodiment, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another exemplary embodiment, the transmit/receive element 36 may be configured to transmit and/or receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other exemplary embodiments, the processor 32 may access information from, and store data in, memory that is not physically located on the node 30, such as on a server or a home computer.

The processor 32 may receive power from the power source 48, and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an exemplary embodiment.

### Exemplary Computing System

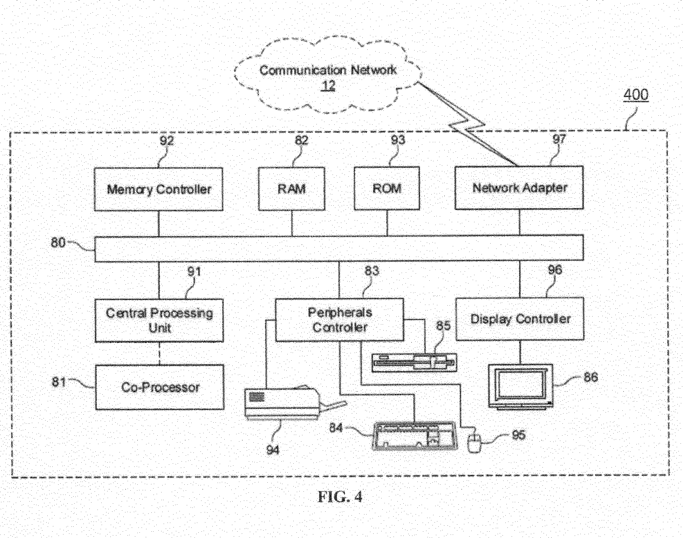

FIG. 4 is a block diagram of an exemplary computing system 400. In some exemplary embodiments, the network device 160 may be a computing system 400. The computing system 400 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 400 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 400 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus.

Memories coupled to system bus 80 include RAM 82 and ROM 93. Such memories may include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 400 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 400. Such visual output may include text, graphics, animated graphics, and video. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 400 may contain communication circuitry, such as for example a network adaptor 97, that may be used to connect computing system 400 to an external communications network, such as network 12 of FIG. 3, to enable the computing system 400 to communicate with other nodes (e.g., UE 30) of the network.

### Exemplary System Operation

The exemplary embodiments may enable video calls/conferencing and/or live video streaming simultaneously from multiple perspectives and viewpoints such as, for example, first person perspectives and/or third person perspectives.

Some exemplary embodiments may leverage combined capabilities of communication devices (e.g., smart glasses, an artificial reality device, or a head-mounted display, smart watches, smart tablets, charging cases, etc.) to provide more immersive experiences in video calls/conferences and/or live video streaming. In some example embodiments, smart glasses worn by a user may provide a first person perspective of video content being captured and one or more other communication devices (e.g., a smart watch, a smart tablet, etc.) may provide a third person perspective of video content being captured.

For instance, for purposes of illustration and not of limitation, consider an example in which a user such as Julian (a fictitious person) is baking sourdough bread in the kitchen at his home in Mountain View. Julian may receive a video call/conference via his smart glasses (e.g., HMD 210) and may answer the video call. A network device (e.g., network device 160) may facilitate the connection of the video call. In this example, Julian's girlfriend Maya (a fictitious person) is calling Julian. Maya has been living in Switzerland the past few months. Consider that once Julian answers the video call, Julian turns around and opens a companion charging case (e.g., a UE 30). The camera (e.g., camera 54) inside the charging case may turn on and facilitate seamless connection of Julian and Maya over video. For instance, the video stream captured by the camera inside the charging case may be provided to the network device which may provide the charging case video to the video call. As an example, the charging case video may capture and provide video of Julian in a third person perspective to the video call. Consider that the sourdough bread in the oven is ready. Julian wants to show Maya how the sourdough bread turns out as Julian tried a new recipe for the sourdough bread. In this regard, Julian may turn on the camera on the smart glasses (e.g., by tapping/touching the smart glasses or via another input mechanism via the smart glasses), which may start a second live video stream, on the same video call/conference, showing Julian's perspective (e.g., first person perspective or viewpoint) while Julian is removing the sourdough bread from the oven. In this regard, the second live video stream may present to Maya on her smart device (e.g., a smart tablet, etc.) what Julian sees/views through Julian's smart glasses. This may be happening simultaneously while the companion charging case sits on the kitchen counter capturing video of Julian's every movement in the kitchen via the camera of the charging case. The bread turns out great. In this example, Maya may view Julian's experience, being presented via Maya's smart device, when Julian is taking the bread out of the oven as the video is captured by Julian's smart glasses. At the same time (e.g., simultaneously), Maya can view, via her smart device, Julian's excitement when Julian takes the sourdough bread out of the oven since the video is being captured by the companion case. In this manner, Maya may share in Julian's experience (in real-time over the video call) with the sourdough bread turning out great based on the new sourdough bread recipe Julian tried. In this example, having simultaneous first person and third person views during video calls may enable immersive experiences. For example, a seamless video call offering both first person and third person perspectives.

For purposes of illustration and not of limitation, consider another example in which a user such as for example Jennifer (a fictious person) is a social media influencer with over 1 million followers worldwide. In this example, consider that Jennifer is attending a concert and wants to live stream her experience to her social media followers. At the concert event, consider that Jennifer turns on her smart glasses (e.g., HMD 210) and also may select an option through a social network service to live stream video and when the smart glasses are turned on, the smart glasses may begin live streaming video associated with the content Jennifer views in the environment at the concert, for example, from Jennifer's first person perspective. In this regard, Jennifer's social media followers may view (on their smart devices) what Jennifer views/sees through Jennifer's smart glasses as the video stream content is being captured at the concert by the smart glasses. For instance, the smart glasses may provide the captured video stream content to a network device (e.g., network device 160) and the network device may stream the captured video to Jennifer's social media followers. In addition, consider a scenario in which Jennifer has a companion charging case for the smart glasses and opens the charging case and turns on a camera (e.g., camera 54) in the charging case to begin capturing video content. The camera inside the charging case may begin sharing the captured video content, via the live video stream, with Jennifer's fans (i.e., Jennifer's social media followers) which may show how Jennifer is enjoying the concert for example with her friends. The companion case, for example when pointed at Jennifer and/or her friends, may capture the video showing Jennifer and/or her friends as they experience the concert. The video capture of Jennifer and/or her friends is from the third person perspective. In this manner, Jennifer's followers worldwide may see, via their smart devices, the band performance on stage at the concert from Jennifer's perspective (e.g., first person perspective). Jennifer's followers may also simultaneously see, via their smart devices, what Jennifer is doing (e.g., a third person perspective) throughout the live streaming event associated with the concert and the followers may react in real time. Through the display (e.g., display 42) inside the charging case, Jennifer may see the reaction from some, or all, of her fans (e.g., Jennifer's social network followers) and may respond in real time during the live streaming event at the concert.

As described above, the network device may receive the captured video stream from the smart glasses and the network device may provide (e.g., via a communication link (e.g., link 150)) the captured video stream content in a live stream to Jennifer's social media followers. Additionally, in an example embodiment, the charging case may share the captured video content that it captures by providing (e.g., via a communication link (e.g., link 150)) the captured video content to the network device (e.g., network device 160) and the network device may simultaneously live stream the captured video captured by the charging case with the captured video captured by the smart glasses to Jennifer's social media followers. In this manner, the network device may provide live streaming of video content simultaneously from first person perspectives and third person perspectives as captured by different communication devices (the smart glasses and charging case in this example).

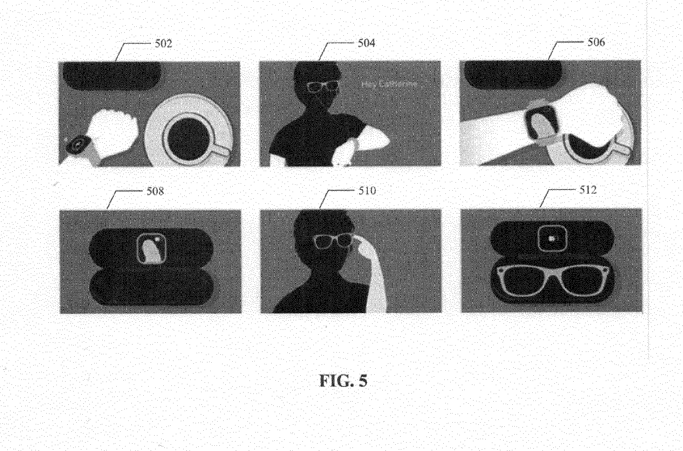

Referring now to FIG. 5, a diagram illustrating an exemplary embodiment of a process for simultaneously providing video content from multiple perspectives and/or viewpoints is provided. In the example of FIG. 5, at step 502, a user such as Jill (a fictitious person) may receive a call (e.g., a video call) from a user such as Catherine (a fictitious person). The call may be received by a smart watch (e.g., a UE 30) worn by Jill. In the example of FIG. 5, users Jill and Catherine made plans to meet up later in the afternoon and while Jill was enjoying her morning coffee in a cafe in the neighborhood Jill received, via the smart watch, the call from Catherine. At step 504, Jill may unlock the smart watch to answer the call from Catherine and may answer the call with a greeting such as, for example, Hey Catherine. In an instance in which Jill unlocks the smart watch and answers the call, the smart glasses (e.g., HMD 210) being worn by Jill may capture video content of a view of the environment (e.g., the cafe) that Jill sees (e.g., from a first person point of view) with the smart glasses and may present the captured video content to a smart device of Catherine during the call. In one example embodiment, for purposes of illustration and not of limitation, the camera of the smart watch being worn by Jill may capture an image of Jill's face and may utilize facial recognition features associated with the image of the face to unlock the smart watch and allow Jill to answer the call. As another example, for purposes of illustration and not of limitation, the smart watch may be unlocked in response to Jill looking through/via the smart glasses at the smart watch to answer the call. In some exemplary embodiments, a user such as Jill may look (e.g., gaze), via the smart glasses, at the smart watch for a predetermined time period (e.g., 2 seconds, 3 seconds, etc.) to unlock the smart watch and answer the call. As yet another example, for purposes of illustration and not of limitation, the smart watch may be unlocked by detecting a voice command from Jill to allow Jill to answer the call. Additionally or alternatively, as another example, the smart watch may receive an input (e.g., entering of an input code, press of a button, etc.) from Jill to unlock the smart watch being worn by Jill and accept the call. The smart watch may be unlocked for answering a call according to any other suitable manner and is not limited by these examples described above which are provided for illustrative purposes.

At step 506, the smart watch may indicate that the power of the smart watch is low (e.g., battery drained below a threshold level) while the smart watch receives the video capture of Catherine, from a smart device (e.g., smart glasses) associated with Catherine, during the call and shows Catherine on the display of the smart watch being worn on the arm of Jill during the call.

At step 508, the smart watch may be removed from a cradle associated with the smart watch and may be docked inside a companion case (e.g., a companion charging case) to begin charging the smart watch. In this manner, the smart watch may capture video of Jill and/or one or more objects (e.g., from a third person point of view) when she is in view of the camera of the smart watch and may present the captured video to a smart device of Catherine during the call, even while the smart watch is being charged. In the example of FIG. 5, the user Jill may remove the smart watch from the cradle and dock the smart watch in the companion case to facilitate charging of the smart watch. As such, user Jill is able to charge the smart watch without interrupting the call by docking the smart watch within the companion case. At step 510, the smart glasses (e.g., HMD 210) being worn by Jill may facilitate switching back and forth between first person points of view and third person points of view during the call with Catherine by switching between the camera of the smart watch and the camera of the smart glasses by, for example, tapping/touching on the smart glasses. In other examples, the smart glasses (e.g., HMD 210) being worn by Jill may facilitate switching back and forth between first person points of view and third person points of view during the call with Catherine by switching between the camera of the smart watch and the camera of the smart glasses by, for example, detecting one or more voice commands and/or hand gestures. In this regard, instead of showing simultaneous first person points of view and third person points of view to Catherine during the call only the view that Jill selects may be shown to Catherine. In some exemplary embodiments, a receipt of the indication of the tap/touch of the smart glasses may be provided by the smart glasses to a network device (e.g., network device 160) such that the network device may facilitate the switching between the first person points of view and the third person points of view by switching between the camera of the smart watch and the camera of the smart glasses. Additionally, for purposes of illustration and not of limitation, one tap may turn off or pause the camera of the charging case leaving on the camera of the smart glasses and as such only the video captured by the smart glasses (e.g., the first person point of view of the video captured by the smart glasses) may be presented to the smart device associated with Catherine during the call. As another example, a second tap of the smart glasses may turn off or pause the camera of the smart glasses leaving on the camera of the companion case which may present only the video captured by the companion case (e.g., the third person point of view of the captured video by the companion case) to the smart device associated with Catherine during the call. As yet another example, a third tap of the smart glasses may turn on both the camera of the smart glasses and the camera of the companion case such that both the video captured by the smart glasses and the companion case (e.g., the first person point of view and the third person point of view) may be presented to the smart device associated with Catherine during the call.

At step 512, the companion case may charge both the smart glasses and the smart watch when placed (e.g., docked) within the companion case. In this regard, for example, after the call with Catherine about Jill and Catherine's plans for the afternoon, Jill may finish her coffee while charging both the smart glasses and the smart watch in the companion case. In an instance in which both the smart glasses and the smart watch are fully charged, Jill may then take the companion case, smart glasses and smart watch and leave the cafe and head over to meet with Catherine downtown.

Although the above examples describe a companion case capturing the third person perspectives it should be pointed out that other suitable communication devices (e.g., smart tablets, smart watches, laptops, etc.) may capture the third person perspectives for presenting the associated video content to users in a video call/conference and/or live video stream.

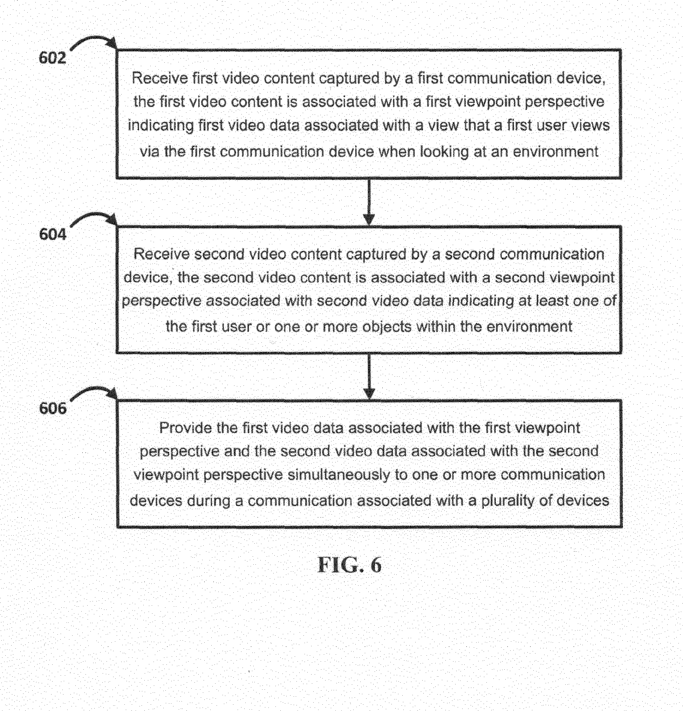

FIG. 6 illustrates an example flowchart illustrating operations for simultaneously providing multiple perspectives of video content during a communication according to an exemplary embodiment. At operation 602, a device (e.g., network device 160) may receive first video content captured by a first communication device. The first video content may be associated with a first viewpoint perspective (e.g., a first person viewpoint) indicating first video data associated with a view that a first user views via the first communication device when looking at an environment. The first communication device may, for example, be smart glasses (e.g., HMD 210), an artificial reality device (e.g., artificial reality device 200) or any other suitable smart device. The first viewpoint perspective and the second viewpoint perspective may be different. For example, in the second viewpoint perspective one or more other users may be unable to view the same viewpoint of the environment as the first user viewing the environment via the first communication device in the first viewpoint perspective.

At operation 604, the device (e.g., network device 160) may receive second video content captured by a second communication device. The second video content may be associated with a second viewpoint perspective (e.g., a third person viewpoint) associated with second video data indicating at least one of the first user or one or more objects within the environment. The second communication device (e.g., a UE 30) may, for example, be a smart watch, a charging case, a smart tablet, or other smart device. At operation 606, the device (e.g., network device 160) may provide the first video data associated with the first viewpoint perspective and the second video data associated with the second viewpoint perspective simultaneously to one or more communication devices during a communication associated with a plurality of devices. The communication may, for example, be a video call, a video conference, or a live video stream.

In an exemplary embodiment, the device (e.g., network device 160) may provide the first video data and the second video data simultaneously to one or more communication devices via a communication link (e.g., a link 150). The device (e.g., network device 160) may provide, in a single communication feed, the first video data and the second video data simultaneously to one or more communication devices. The device (e.g., network device 160) providing the first video data from the first viewpoint perspective (e.g., a first person viewpoint) and the second video data from the second viewpoint perspective (e.g., a third person viewpoint) to one or more communication devices may enable a display device of the one or more communication devices to simultaneously display the first video data and second video data during the communication. A display device (e.g., display 42) associated with the one or more communication devices may, for example, display the first video data and the second video data side-by-side on the display device. In another example embodiment, the display device (e.g., display 42) associated with the one or more communication devices may display/present the second video data within a display window displaying/presenting the first video data (e.g., in a Picture-In-Picture (PIP) manner).

### Alternative Embodiments

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments also may relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following claims.

## Claims

1. A method comprising:
receiving first video content captured by a first communication device, the first video content is associated with a first viewpoint perspective indicating first video data associated with a view that a first user views via the first communication device when looking at an environment;
receiving second video content captured by a second communication device, the second video content is associated with a second viewpoint perspective associated with second video data indicating at least one of the first user or one or more objects within the environment; and
providing the first video data associated with the first viewpoint perspective and the second video data associated with the second viewpoint perspective simultaneously to one or more communication devices during a communication associated with a plurality of devices.

2. The method of claim 1, wherein the first viewpoint perspective and the second viewpoint perspective are different.

3. The method of claim 1 or claim 2, wherein the communication comprises a video call, a video conference or a live video stream.

4. The method of claim 1, claim 2 or claim 3, wherein providing comprises providing the first video data and the second video data simultaneously to the one or more communication devices via a communication link.

5. The method of any one of the preceding claims, wherein the first communication device comprises smart glasses, an artificial reality device, or a head-mounted display.

6. The method of any one of the preceding claims, wherein the second communication device comprises a smart watch, a charging case, or other device.

7. The method of any one of the preceding claims, further comprising one or more:
i. enabling switching between the first viewpoint perspective and the second viewpoint perspective during the communication in response to receipt of an indication of at least one tap or touch associated with the first communication device;
ii. enabling switching between a first camera associated with the first communication device and a second camera associated with the second communication device during the communication in response to receipt of an indication of at least one tap or touch associated with the first communication device.

8. A device comprising:
one or more processors; and
at least one memory storing instructions, that when executed by the one or more processors, cause the device to:
receive first video content captured by a first communication device, the first video content is associated with a first viewpoint perspective indicating first video data associated with a view that a first user views via the first communication device when looking at an environment;
receive second video content captured by a second communication device, the second video content is associated with a second viewpoint perspective associated with second video data indicating at least one of the first user or one or more objects within the environment; and
provide the first video data associated with the first viewpoint perspective and the second video data associated with the second viewpoint perspective simultaneously to one or more communication devices during a communication associated with a plurality of devices.

9. The device of claim 8, wherein the first viewpoint perspective and the second viewpoint perspective are different.

10. The device of claim 8 or claim 9, wherein the communication comprises a video call, a video conference, or a live video stream.

11. The device of claim 8, claim 9, or claim 10, wherein when the one or more processors further execute the instructions, the device is configured to:
provide the first video data and the second video data by providing the first video data and the second video data simultaneously to the one or more communication devices via a communication link.

12. The device of any one of claims 8 to 11, wherein the first communication device comprises smart glasses, an artificial reality device, or a head-mounted display; and/or preferably
wherein the second communication device comprises a smart watch, a charging case, or other device.

13. The device of any one of claims 8 to 12, wherein when the one or more processors further execute the instructions, the device is configured to one or more of:
i. enable switching between the first viewpoint perspective and the second viewpoint perspective during the communication in response to receipt of an indication of at least one tap or touch associated with the first communication device;
ii. enable switching between a first camera associated with the first communication device and a second camera associated with the second communication device during the communication in response to receipt of an indication of at least one tap or touch associated with the first communication device.

14. A computer-readable medium storing instructions that, when executed, cause:
receiving first video content captured by a first communication device, the first video content is associated with a first viewpoint perspective indicating first video data associated with a view that a first user views via the first communication device when looking at an environment;
receiving second video content captured by a second communication device, the second video content is associated with a second viewpoint perspective associated with second video data indicating at least one of the first user or one or more objects within the environment; and
providing the first video data associated with the first viewpoint perspective and the second video data associated with the second viewpoint perspective simultaneously to one or more communication devices during a communication associated with a plurality of devices.

15. The computer-readable medium of claim 14, wherein the instructions, when executed, further cause one or more of
i. providing the first video data and the second video data by providing the first video data and the second video data simultaneously to the one or more communication devices via a communication link;
ii. enabling switching between the first viewpoint perspective and the second viewpoint perspective during the communication in response to receipt of an indication of at least one tap or touch associated with the first communication device;
iii. enabling switching between a first camera associated with the first communication device and a second camera associated with the second communication device during the communication in response to receipt of an indication of at least one tap or touch associated with the first communication device.
